# EUROPEAN PATENT APPLICATION

(11) **EP 4 406 775 A1**
(43) Date of publication of application: **31.07.2024**
(21) Application number: 24154714.0
(22) Date of filing: 30.01.2024
(51) Int. Cl.: B60L 53/16, B60L 53/30

(54) **EV CHARGING SYSTEM AND METHOD FOR SEPARATING THE HIGH PRECISION MECHANICS AND HIGH LOAD MECHANICS**

(30) Priority: 30.01.2023 US 202318161586
(71) Applicant: ABB E-mobility B.V., 2629 JG Delft (NL)
(72) Inventor: COLE, Gregory, West Hartford CT 06117 (US); UGUR, Ali, 2545 XP Den Haag (NL); EAKINS, Will, Coventry CT 06238 (US); RILEY, Alex, Houston TX 77009 (US)
(74) Representative: Zimmermann & Partner Patentanwälte mbB

(57) **Abstract**

An electric charging system includes an automatic connection device (ACD) outside a chargeable device. The ACD is electrically coupled to an energy source and includes a plug head electrically and mechanically connectable to the chargeable device and a first mechanism that positions the plug head at an inlet. The head includes a plug head connector with electrically conductive pins and a plug head lock with a first shape. The inlet includes electrically conductive sockets complementary to the electrically conductive pins; a plug head coupler including a shape that is complementary to the first shape and mechanically couples with the plug head via the plug head lock; and a second mechanism that mechanically and electrically couples the pins to the sockets. The second mechanism can produce a force greater than the first mechanism, and the first mechanism moves with greater translational and rotational precision than the second mechanism.

## Description

### BACKGROUND

Electric vehicles require electrical charging in order to operate. One means of charging may be performed through direct electrical connection, where a plug (either male or female) from a charger or charging station is mated with a socket in the electric vehicle. The socket, which may be part of a vehicle inlet, may be positioned in various locations on the exterior surface of the electric vehicle. For example, the vehicle inlet may be disposed on a side or underneath section of the vehicle. Charging may also be done manually, with a user of the vehicle or a technician connecting a plug from the charger to the vehicle inlet (or port) of the electric vehicle. Automatic connecting, requiring no human involvement in making a connection between the plug and the vehicle inlet, may provide added convenience and safety to charging. Safety may be enhanced by avoiding human presence near the charging connection should an accidental discharge/short circuit occur. Securing a connection between the plug and the vehicle inlet, whether by a manual or an automatic connecting process, requires both precision and high insertion force. High precision is necessary to align the plug with the vehicle inlet and high insertion force is needed to securely and fully couple the plug and the vehicle inlet. An automatic connection apparatus may thus be complex and expensive.

### BRIEF SUMMARY

One or more embodiments of the present disclosure provide an electric charging system. The electric charging system includes: an automatic connection device disposed outside a chargeable device. The automatic connection device is configured to be electrically coupled to an electrical energy source and includes: a plug head configured to electrically and mechanically connect to the chargeable device, the plug head including: a plug head connector comprising a first plurality of electrically conductive pins and/or sockets configured to receive pins; and a plug head lock comprising a first shape; and a first mechanism configured to position the plug head at an inlet. The inlet includes: a second plurality of electrically conductive sockets and/or pins configured to be complementary to the first plurality of electrically conductive pins and/or sockets of the plug head connector; a plug head coupler comprising a second shape that is complementary to the first shape of the plug head lock and configured to mechanically couple with the plug head by securely grasping the plug head lock; and a second mechanism configured to mechanically and electrically couple the first plurality of electrically conductive pins and/or sockets and the second plurality of electrically conductive sockets and/or pins. The inlet is configured to be: disposed in an outer surface of the chargeable device; and electrically connected to at least one energy storage device in the chargeable device. The first mechanism is configured to produce a first maximum force and to move with a first translational and rotational precision. The second mechanism is configured to produce a second maximum force and to move with a second translational and rotational precision. The second maximum force is greater than the first maximum force, and the first translational and rotational precision is higher than the second translational and rotational precision.

Further, one or more embodiments of the present disclosure provide a method for charging a chargeable device using an electric charging system. The chargeable device includes at least one energy storage device. The electric charging system includes: an automatic connection device disposed outside a chargeable device, the automatic connection device being configured to be electrically coupled to an electrical energy source and including: a plug head configured to electrically and mechanically connect to the chargeable device, the plug head including: a plug head connector including a first plurality of electrically conductive pins and/or sockets configured to receive pins; and a plug head lock comprising a first shape; and a first mechanism configured to position the plug head at an inlet. The inlet includes: a second plurality of electrically conductive sockets and/or pins configured to be complementary to the first plurality of electrically conductive pins and/or sockets of the plug head connector; a plug head coupler comprising a second shape that is complementary to the first shape of the plug head lock and configured to mechanically couple with the plug head by securely grasping the plug head lock; and a second mechanism configured to mechanically and electrically couple the first plurality of electrically conductive pins and/or sockets and the second plurality of electrically conductive sockets and/or pins. The inlet is configured to be: disposed in an outer surface of the chargeable device; and electrically connected to the at least one energy storage device in the chargeable device. The method includes: moving, using the first mechanism, the plug head to the inlet; locking, using the inlet, the plug head in correct orientation at the inlet; inserting, using a second mechanism, a plug connector in the inlet; and charging, using the electric charging system the chargeable device. The first mechanism is configured to produce a first maximum force and to move with a first translational and rotational precision and the second mechanism is configured to produce a second maximum force and to move with a second translational and rotational precision. The second maximum force is greater than the first maximum force, and the first translational and rotational precision is higher than the second translational and rotational precision.

### BRIEF DESCRIPTION OF THE SEVERAL VIEWS OF THE DRAWINGS

FIG. 1 shows a side body vehicle inlet connection process for charging an electric vehicle in accordance with one or more embodiments.
FIG. 2 shows an underbody electric charging system for an electric vehicle in accordance with one or more embodiments.
FIG. 3 shows a flowchart of method for automatically charging an electric vehicle in accordance with one or more embodiments.

### DETAILED DESCRIPTION

One or more embodiments of the present disclosure present a system and a method for automatically connecting an electric charging station, or electric charger, to a vehicle inlet, or port, for charging an electric vehicle.

A system and method for connecting the plug head of an electric vehicle charger with the side body inlet of an electric vehicle may include the following. During a first stage of the process, fine precision placement processes will position the plug head at the vehicle inlet and the plug head will be mechanically secured. The next stage of the process makes use of a second actuation device and process that will mate the electrical connection between the vehicle and the electric vehicle charger. By separating the precision and force actuation methods and mechanisms at each stage, the cost and complexity of the overall system may be greatly reduced.

When inserting an electric vehicle charging plug into a vehicle, considerations associated with the precision and force requirements may be observed. There are a high precision aspect to position the plug head at the vehicle inlet and a high force aspect to mate the electrical connections between the charger and the vehicle. While a human operator can easily manage these challenges, it becomes impractical or expensive to develop an automatic connection device that operates at both high force and high precision in a single mechanical actuation system.

Thus, there is a need for a system that is robust in the ability to position the plug head at the vehicle inlet and that is able to apply the required force to mate the plug head connector with the vehicle inlet.

One or more embodiments of the present disclosure provide a system and method for connecting an electric vehicle charger with a vehicle inlet. The task of plugging in a charging connector is a challenge regarding the precise positioning of the plug head at the vehicle inlet and the high insertion force that is required to connect the electric vehicle charger. The system and method disclosed herein may provide a less expensive and less complex system and method by separating the precision actuation method for positioning the plug head at the vehicle inlet and the insertion force actuation method for achieving the connection insertion force.

One or more embodiments provide a system and method for connecting the plug head of an electric vehicle charger with the side body inlet of an electric vehicle. The process progresses as follows: (1) an automatic connection device receives positional information about the location of the vehicle inlet, that is, the relative position and orientation of the plug head with respect to the inlet and/or the position and orientation of the plug head and the position and orientation of the inlet. The positional information may be provided by a localization system that is included in the automatic connection device. (2) The automatic connection device, using fine precision placement processes, positions the plug head at the vehicle inlet in the required insertion orientation. (3) A locking system will mechanically secure the plug head to the vehicle in the required insertion orientation. (4) The high force actuation system will insert the plug head into the vehicle inlet along the direction facilitated by the positioning system.

One or more embodiments can be applied to any charging system that could benefit from this style of separation of high precision and high force mechanics.

A plug head needs to be moved with precision to a vehicle inlet configured to connect to, or couple with, or receive, the plug head. While this movement requires precision, little force is required. The plug head then must engage the vehicle inlet before charging may begin. The vehicle inlet may then lock the plug head in place in preparation for engaging the plug head connector with the vehicle inlet. This separate step of engagement requires greater force, though less precision than the step of positioning the plug head at the vehicle inlet. Requiring both steps to be performed by a combined high precision, high force mechanics/mechanism may involve mechanical, electrical, and physical standards that are demanding. Thus, there is a need to provide an automated charging means that reduces cost and complexity.

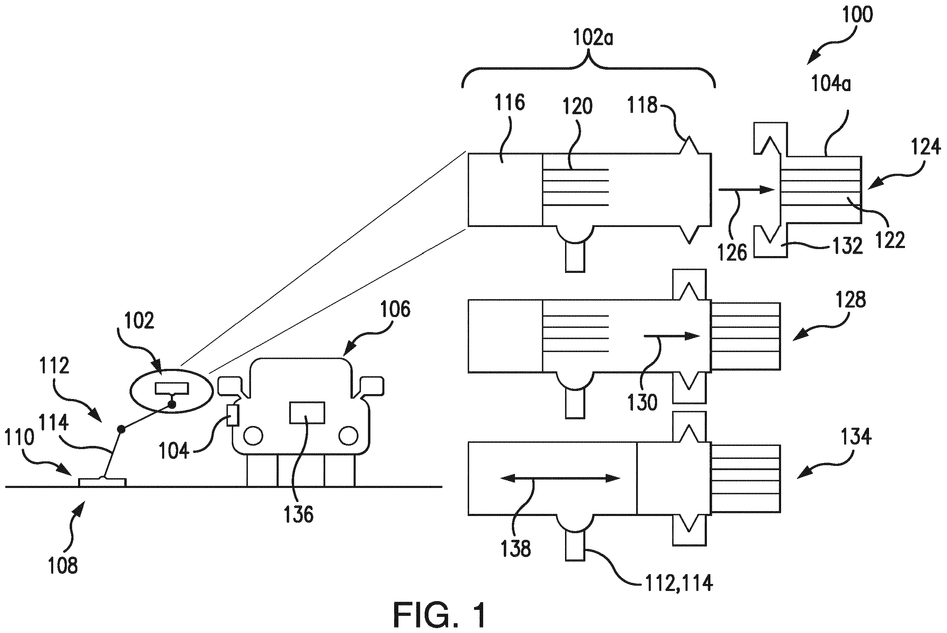

FIG. 1 shows a side body vehicle inlet connection system 100 and method for connecting a plug head 102 of an electric charging system to a vehicle inlet 104 of the electric charging system, the vehicle inlet 104 being disposed on an outer surface of an electric vehicle 106.

An automatic connection device (ACD) 108 may be used to charge electric vehicle 106. The ACD 108 includes a base 110, the plug head 102, the vehicle inlet 104, and a first mechanism 112 that includes high precision position mechanics. The first mechanism 112 utilizes the high precision position mechanics to position the plug head 102 at the vehicle inlet 104. In one or more embodiments, the first mechanism 112 may include an arm 114. The arm 114 may be an articulating arm and may reach a significant distance away from the base 110 of the ACD 108, to which one end of the arm 114 is connected. The second end of the arm 114 is connected to the plug head 102. The first mechanism 112 may provide six degrees of freedom (three translational degrees of freedom, i.e., x, y, and z, and three orientation degrees of freedom, i.e., pitch, roll, and yaw) to allow the first mechanism 112 to properly align the plug head 102 with the vehicle inlet 104. The first mechanism 112 is not required to provide a large force, in part because when the first mechanism 112 has reached a considerable distance away from the base 110 to position the plug head 102 at the vehicle inlet 104, as for example, with an articulating arm 114, applying a large force would require considerable complication, at additional expense, of the ACD 108.

Still referring to FIG. 1, a more detailed view of the plug head 102a and the vehicle inlet 104a shows that the plug head 102a includes a plug head connector 116 and a plug head lock 118. The plug head connector 116 includes electrical connectors, shown here as electrically conductive pins 120. In other embodiments, the electrical connectors of the plug head connector may be sockets configured to receive electrically conductive pins or a combination of pins and sockets. The vehicle inlet 104a is shown with electrically conductive sockets 122 that complement the electrically conductive pins 120 of the plug head connector 116. In other embodiments, the pins and the sockets may be partially or completely interchanged between the plug head connector 116 and the vehicle inlet 104a, provided the pins and sockets are complementary to allow proper mating of the plug head connector 116 and the vehicle inlet 104a.

The step of plug head positioning 124 may be performed by the first mechanism 112 to allow high precision translational and orientation positioning 126 of the plug head 102a at the vehicle inlet 104a.

With the plug head 102a properly positioned and oriented with the vehicle inlet 104a, a step of locking 128, 130 the plug head 102a at the vehicle inlet 104a, the vehicle inlet 104a may lock the plug head 102a in place using the plug head lock 118 to secure the position and orientation. The plug head lock 118 may include a first shape or other feature that is complementary to a second shape 132 or feature on the vehicle inlet 104a that allows the locking to take place.

Once the plug head 102a is locked in place 128, 130, a second mechanism mechanically and electrically couples the plurality of electrically conductive pins and/or sockets 120 of the plug head 102a to a complementary plurality of sockets and/or pins 122 of the vehicle inlet 104a. This step allows the plug head 102a and the vehicle inlet 104a to be successfully mated 134.

With the plug head 102a locked in place with the vehicle inlet 104a, the second mechanism, which is disposed on the vehicle inlet 104a, does not require the same level of precision for its movements as the first mechanism that moves the plug head 102 does. However, the second mechanism must be able to provide a greater force than the first mechanism because the actuator of the second mechanism must engage the plurality pins with the plurality of sockets. In some cases, partial misalignment of the plug head 102a and the vehicle inlet 104a and/or corrosion of the pins and sockets may increase the resistance needed to be overcome by the second mechanism in order to mate the plug head and the vehicle inlet.

At this point, charging of the electric vehicle may begin. In addition, the vehicle inlet 104a and the automatic charging device may be communicatively coupled. One or more pins that connect the electric charger and the electric vehicle may be used to communicate information. Some of this information may include the level of charge in the one or more energy storage devices 136 in the electric vehicle 106, the rate of charging, and other data transmission such as vehicle diagnostics, software and firmware upgrades, and the like.

In one or more embodiments, when charging is completed to the level desired, the second mechanism that mates the plug head connector 116 and the vehicle inlet 104a may also be used to eject or disengage 138 the plug head connector 116 from the vehicle inlet 104a. In some embodiments, the second mechanism may actively disengage the two components. In other embodiments, the second mechanism may actively hold or retain the plug head connector 116 in place and may disengage passively, or in a passive mode.

The electric vehicle 106 includes an energy storage device 136 that is electrically connected to the vehicle inlet 104 to allow the energy storage device 136 to be charged. The energy storage device 136 may include one or more batteries (i.e., devices that store chemical energy) such as lithium-ion, lead-acid, nickel-cadmium, and the like. Other forms of energy storage may also be used including a capacitor or array of capacitors, one or more supercapacitors, also referred to as ultracapacitors, forms of mechanical energy storage such as a flywheel, or a thermal battery that stores energy as thermal energy and may store energy in a phase transition of the composition material.

The vehicle inlet 104 may be located at various positions on the outer surface of the electric vehicle 106. It may be placed on a side surface as shown in FIG. 1. Such placement may be readily extended to include the back or the front of the electric vehicle 106. A vehicle inlet may be disposed on an underbody surface of an electric vehicle in a fashion similar to the side body vehicle inlet 104 of FIG 1.

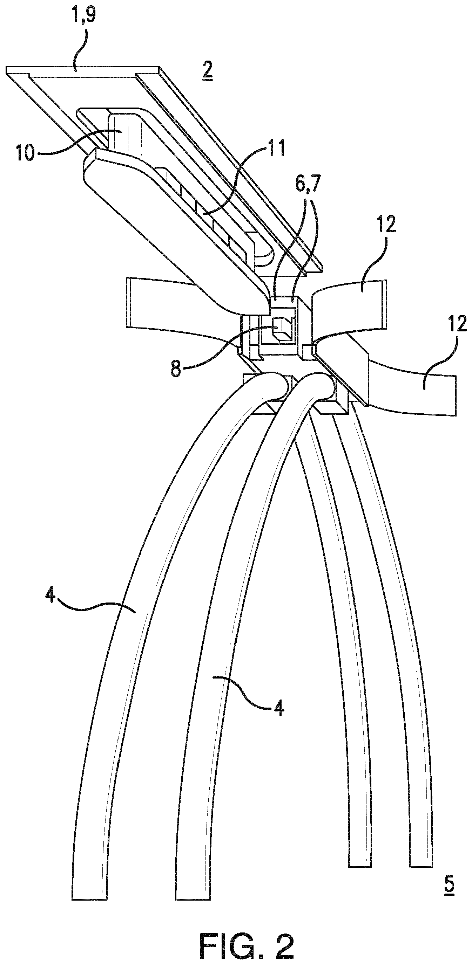

Alternatively, as shown in FIG. 2, an electric vehicle 2 may include a charging plug 1 disposed on the underbody of electric vehicle 2 and designed to couple with a charger inlet that may include springs 4. The charging plug 1 may include vehicle contacts 11 disposed to make an electrical connection with charging contact 8 of the charger inlet. The charger inlet may also include two parts 7 that each attach to one spring 4 and to charging connector 6. Funnel-shaped ends 12 may be used to guide the connection of the vehicle contacts 11 to the charging contact 8. Additionally, upward facing (i.e., top) surfaces of an electric may also be designed to include a vehicle inlet.

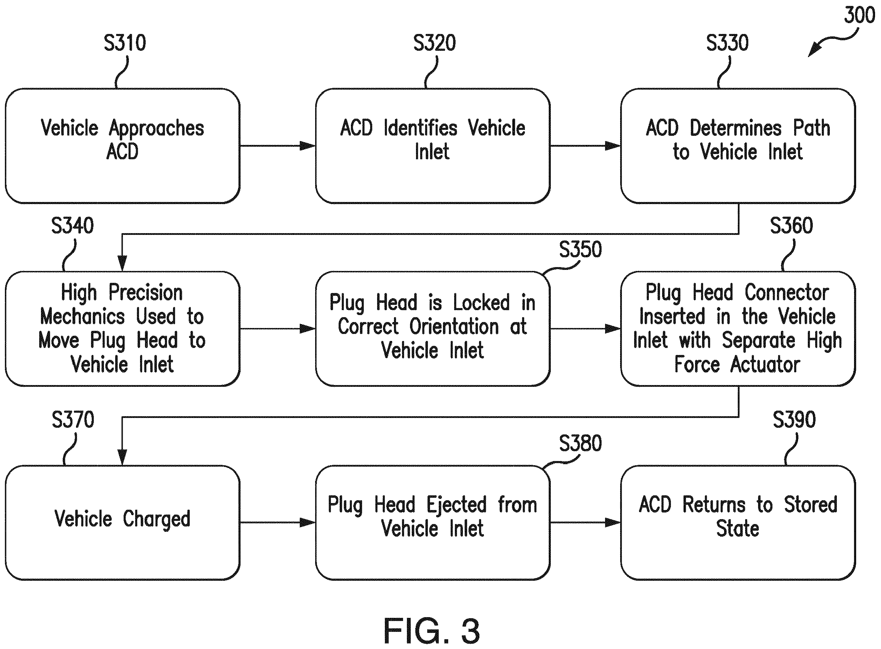

Referring to FIG. 3, a flowchart presents a method 300 that may be applied to charge an electric vehicle. While steps are presented in a linear fashion and a particular order, other arrangements of the steps may be possible with the same overall effect. An electric vehicle approaches an automatic connection device (ACD) of an electric charger S310. The ACD identifies the location of the vehicle inlet of the vehicle S320. Identification may be done with visible light, other portions of the electromagnetic spectrum such as infrared or radio waves, including RFID, acoustic sensors, local GPS, or other means. The ACD, using a processor, utilizes the acquired location data (that is, positional information) to determine the position of the vehicle inlet relative to the plug connector and determines a path for the plug connector to the vehicle inlet S330. A first mechanism with high precision positional (translational) and orientation control positions the plug connector at the vehicle inlet S340. The vehicle inlet, using its shape that complements that shape of the plug head lock, locks the plug head securely in place on the vehicle inlet S350. With the plug head locked in place, a second mechanism, disposed on the vehicle inlet and capable of producing a larger force than the first mechanism, inserts the plug head connector into the vehicle inlet, allowing mechanical and electrical connections to be made between the plug head connector and the vehicle inlet S360. At this point the electric vehicle may be charged S370. When charging is completed, interrupted, or aborted, the plug head is ejected from the vehicle inlet S380. The step of ejection may be actively performed by the second mechanism used to insert the plug head connector. Alternatively, the second mechanism may be used to actively hold the plug head connector in place during charging and may release the plug head and passively eject it. In another alternative, a third mechanism may be used to actively eject the plug head connector from the vehicle inlet. After the plug head is ejected, the ACD returns to a stored state S390.

While much of the present disclosure has discussed charging an electric vehicle, and especially from a vehicle inlet disposed on the side of the electric vehicle, the systems and methods disclosed herein may also be applied to other types of chargeable devices and may have a charging inlet (or, simply, inlet) disposed in other locations of the chargeable device.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An electric charging system comprising:
an automatic connection device disposed outside a chargeable device, the automatic connection device being configured to be electrically coupled to an electrical energy source and comprising:
a plug head configured to electrically and mechanically connect to the chargeable device, the plug head comprising:
a plug head connector comprising a first plurality of electrically conductive pins and/or sockets configured to receive pins; and
a plug head lock comprising a first shape; and
a first mechanism configured to position the plug head at an inlet; and
the inlet comprising:
a second plurality of electrically conductive sockets and/or pins configured to be complementary to the first plurality of electrically conductive pins and/or sockets of the plug head connector;
a plug head coupler comprising a second shape that is complementary to the first shape of the plug head lock and configured to mechanically couple with the plug head by securely grasping the plug head lock; and
a second mechanism configured to mechanically and electrically couple the first plurality of electrically conductive pins and/or sockets and the second plurality of electrically conductive sockets and/or pins,
the inlet configured to be:
disposed in an outer surface of the chargeable device; and
electrically connected to at least one energy storage device in the chargeable device,
wherein the first mechanism is configured to produce a first maximum force and to move with a first translational and rotational precision and the second mechanism is configured to produce a second maximum force and to move with a second translational and rotational precision,
wherein the second maximum force is greater than the first maximum force, and
wherein the first translational and rotational precision is higher than the second translational and rotational precision.

2. The electric charging system of claim 1, wherein the chargeable device is an electric vehicle and the inlet is a vehicle inlet.

3. The electric charging system of any one of claims 1 and 2, wherein the second mechanism is further configured to disengage the plug head connector from the inlet.

4. The electric charging system of any one of claims 1 through 3, wherein the inlet further comprises a third mechanism configured to disengage the plug head connector from the inlet.

5. The electric charging system of any one of claims 1 through 4, wherein the second mechanism is further configured to actively retain the plug head connector in the inlet, and
wherein disengaging the plug head connector from the inlet is performed with the second mechanism in a passive mode.

6. The electric charging system of any one of claims 1 through 5, wherein the at least one energy storage device comprises at least one of a battery, a capacitor, a supercapacitor, a flywheel, and a thermal battery.

7. The electric charging system of any one of claims 1 through 6, wherein the automatic connection device further comprises a processor configured to use positional information to determine a path to position the plug head at the inlet, particularly wherein the positional information comprises a relative position and orientation of the plug head with respect to the inlet and/or the position and orientation of the plug head and the position and orientation of the inlet or particularly wherein the automatic connection device further comprises a localization system that provides the positional information to the processor.

8. The electric charging system of any one of claims 1 through 7, wherein the automatic connection device further comprises a base, particularly wherein the first mechanism comprises an arm configured to articulate, the arm comprising a first end disposed on the base and a second end connected to the plug head.

9. The electric charging system of claim 2 or of any one of claims 3 through 8 in their dependency on claim 2, wherein the vehicle inlet is disposed on a side or back outer surface of the electric vehicle.

10. The electric charging system of claim 2 or of any one of claims 3 through 8 in their dependency on claim 2, wherein the vehicle inlet is disposed on an underbody outer surface of the electric vehicle.

11. The electric charging system of any one of claims 1 through 10, wherein the inlet is further configured to be communicatively coupled to the automatic connection device.

12. The electric charging system of any one of claims 1 through 11, wherein mechanically and electrically coupling the first plurality of electrically conductive pins and/or sockets and the second plurality of electrically conductive sockets and/or pins includes communicatively coupling the automatic connection device and the chargeable device.

13. A method for charging a chargeable device using an electric charging system, the chargeable device comprising:
at least one energy storage device;
the electric charging system comprising:
an automatic connection device disposed outside a chargeable device, the automatic connection device being configured to be electrically coupled to an electrical energy source and comprising:
a plug head configured to electrically and mechanically connect to the chargeable device, the plug head comprising:
a plug head connector comprising a first plurality of electrically conductive pins and/or sockets configured to receive pins; and
a plug head lock comprising a first shape; and
a first mechanism configured to position the plug head at an inlet;
the inlet comprising:
a second plurality of electrically conductive sockets and/or pins configured to be complementary to the first plurality of electrically conductive pins and/or sockets of the plug head connector;
a plug head coupler comprising a second shape that is complementary to the first shape of the plug head lock and configured to mechanically couple with the plug head by securely grasping the plug head lock; and
a second mechanism configured to mechanically and electrically couple the first plurality of electrically conductive pins and/or sockets and the second plurality of electrically conductive sockets and/or pins,
the inlet configured to be:
disposed in an outer surface of the chargeable device; and
electrically connected to the at least one energy storage device in the
chargeable device;
the method comprising:
moving, using the first mechanism, the plug head to the inlet;
locking, using the inlet, the plug head in correct orientation at the inlet;
inserting, using a second mechanism, a plug connector in the inlet; and
charging, using the electric charging system the chargeable device,
wherein the first mechanism is configured to produce a first maximum force and to move with a first translational and rotational precision and the second mechanism is configured to produce a second maximum force and to move with a second translational and rotational precision,
wherein the second maximum force is greater than the first maximum force, and
wherein the first translational and rotational precision is higher than the second translational and rotational precision.

14. The method of claim 13, further comprising:
Identifying, using a localization system, the inlet disposed on an outer surface of the chargeable device; and
determining, using the automatic connection device, a path for a plug head to the inlet.

15. The method of any one of claims 13 and 14, further comprising:
ejecting the plug head from the inlet; and
returning the automatic connection device to a stored state, particularly wherein the ejecting comprises the second mechanism disengaging the plug head from the inlet or particularly wherein the charging comprises the second mechanism actively retaining the plug head connector in the inlet, and
wherein disengaging the plug head connector from the inlet comprises the second mechanism entering in a passive mode.
